(19) Europäisches Patentamt
European Patent Office
Office européen des brevets

(11) Publication number: **0 450 826 A1**

(12) **EUROPEAN PATENT APPLICATION**

(21) Application number: **91302588.8**

(22) Date of filing: **25.03.91**

(51) Int. Cl.⁵: **G11B 23/04, G11B 23/08**

(30) Priority: **03.04.90 JP 35440/90**

(43) Date of publication of application:
**09.10.91 Bulletin 91/41**

(84) Designated Contracting States:
**DE FR GB**

(71) Applicant: **KONICA CORPORATION**
**26-2, Nishi-shinjuku 1-chome Shinjuku-ku**
**Tokyo (JP)**

(72) Inventor: **Sakurada, Shinji, C/o Konica**
**Magnetic Products Inc**
**801 Oaza Nakadate Azanunoge,**
**Tamaho-machi**
**Nakakoma-gun, Yamanashi-ken (JP)**
Inventor: **Nakamura, Kazuki, C/o Konica**
**Magnetic Products Inc**
**801 Oaza Nakadate Azanunoge,**
**Tamaho-machi**
**Nakakoma-gun, Yamanashi-ken (JP)**
Inventor: **Inoue, Hideo, C/o Konica Magnetic**
**Products Inc**
**801 Oaza Nakadate Azanunoge,**
**Tamaho-machi**
**Nakakoma-gun, Yamanashi-ken (JP)**

(74) Representative: **Ben-Nathan, Laurence Albert**
**et al**
**Urquhart-Dykes & Lord 91 Wimpole Street**
**London W1M 8AH (GB)**

(54) **Tape Cassette.**

(57)    The invention provides a tape cassette in which a first and second tape reels for supplying and taking up a roll of tape. A first and second tape guides are disposed to form a tape passage between the first and second tape reels, for guiding the tape to run along the tape passage. Either the first or second tape guides is inclined in positional relation to the tape passage so as to move the tape in a predetermined direction.

EP 0 450 826 A1

# F I G. 1

## BACKGROUND OF THE INVENTION

The present invention relates to tape cassettes.

The general structure of a tape cassette, for example for video tape use, will be explained as follows. A supply reel and a take-up reel are provided to a lower half of the cassette of which the tape cassette is composed. The tape is stretched along a predetermined tape path between the supply reel and the take-up reel. Various parts other than the above-described parts are also provided in the tape cassette. After that, an upper half of which the tape cassette is composed, is joined to the lower half of the cassette, and then they are integrally assembled by screws.

When the tape cassette as described above is used for playing back and recording in a video tape recorder, it has been observed that tape edges of the tape cassette are often damaged, which is called tape damage.

## SUMMARY OF THE INVENTION

An object of the present invention is to provide a tape cassette in which tape damage does not occur.

The above-described object of the present invention is attained by a tape cassette comprising: a cassette case main body; the first and second reels provided in the cassette case main body; the first and second tape guides provided along a predetermined tape path between the first and second tape reels; and a tape stretched between the above-described first and second reels along the first and second tape guides, wherein the above-described second tape guide is inclined, and the tape pulled out from the tape cassette is upwardly pushed when the tape is running.

The inventor of the present invention has precisely examined the causes of tape damage. It has been found that: the tape pulled out from a tape cassette in a recording or playing back operation, is pushed downwardly by the recording and playing back apparatus; the tape pulled out from the tape cassette is moved downwardly by the force; as a result, the lower edges of the tape contact the cassette case; and thereby tape damage occurs.

Accordingly, it has been considered that: when a force opposed to the downward force which acts on the tape pulled out from the tape cassette, is applied to the tape, the forces acting on the tape are balanced and the tape can not be moved downwardly; and as a result, tape damage does not occur. New technology has been developed by the inventors according to the results of consideration described above.

During development, the following has been found: in this kind of tape cassette, the first and second tape guides are provided between the first and second reels; and even when recording or playing back is conducted, the tape pulled out from the tape cassette contacts with the second tape guide. Then, the following was considered: when the second tape guide is provided with its surface inclined, the contact force acting on the tape from the second tape guide is weak on the lower side of the tape, and the contact force on the upper side of the tape is strong; thereby a upward force (a pull-up force) is applied to the tape; the upward force is balanced with the downward force by the recording and playing back apparatus; and accordingly, tape damage does not occur. The present invention has been accomplished according to the above-described idea.

## BRIEF DESCRIPTION OF THE DRAWINGS

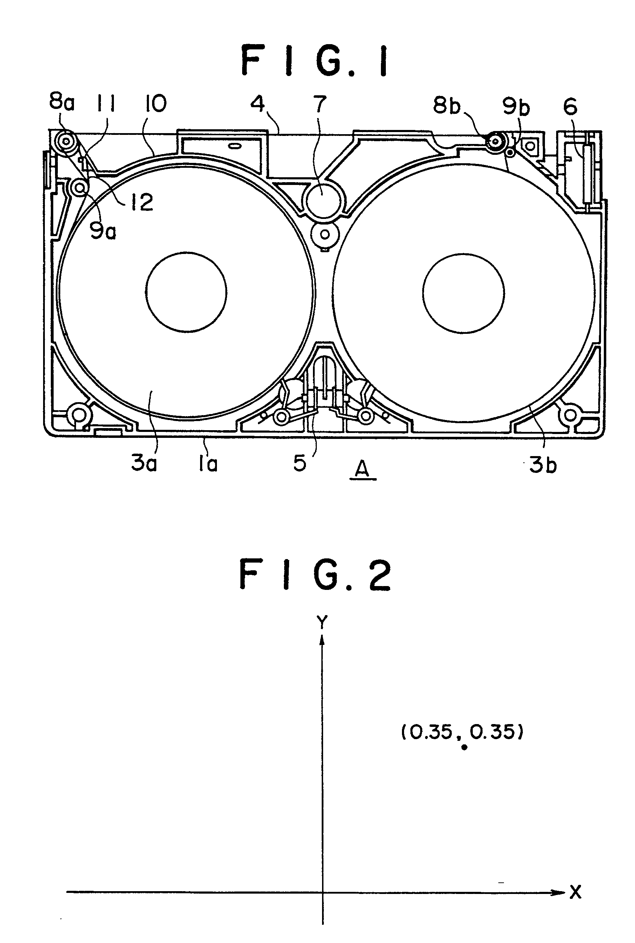

Fig. 1 and Fig. 2 show an example of the tape cassette according to the present invention;
Fig. 1 is a schematic plan view in which the upper half is removed from the tape cassette; and
Fig. 2 is a view which shows the inclination of the second tape guide.

## DETAILED DESCRIPTION OF THE PREFERRED EMBODIMENT

In Fig. 1, A is a tape cassette. The main case body of the tape cassette is composed of the lower half 1a and upper half 1b (not shown in the drawings). The front lid 2 (not shown in the drawings) is rotatably provided to the main case body.

The numeral 3a is a supply reel rotatably provided in the main case body; the numeral 3b is a take up reel rotatably provided in the main case body; the numeral 4 is a magnetic tape stretched along a predetermined tape path between the supply reel 3a and the take up reel 3b; the numeral 5 is a reel locking mechanism which prevents the supply reel and take up reel from rotating; the numeral 6 is a front lid locking mechanism which prevents the front lid from opening; the numeral 7 is a hole into which a light source to detect the tape end enters; the numerals 8a, 8b are cylindrical guide rollers (the length of which is 16mm each) to guide the tape; and the numerals 9a, 9b are tape guide pins.

The numeral 10 is a wall which is formed in the front end portion of the lower half 1a; the numeral 11 is a branched wall which is branched from the wall 10 and V-shaped; the tape pad member 12 is provided between the wall 10 and the branched wall 11.

The guide roller 8b to guide a tape provided corresponding to the take up reel 3b, is not vertically provided to the base of the lower half 1a, which is different from a conventional cassette. The guide roller 8b is provided with a slight inclination to the bottom surface of the lower half 1a.

Specifically , as shown in Fig.2, when the central position in the vertical direction of the guide roller 8b to guide a tape is defined as the position of the origin in the X-Y coordinates, the guide roller is inclined in such a manner that: the upper end of the guide roller 8b is placed in the position of (X, Y) = (+ 0.35mm, + 0.35mm); and the lower end of the guide roller 8b is placed in the position of (X, Y) = (- 0.35mm, -0.35mm). Namely, the upper end of the guide roller 8b is inclined toward the upper right side in Fig. 1 (the position in the first quadrant in Fig. 2).

The tape cassette with the above structure was provided in a video tape recorder, and recording and playing back were conducted repeatedly. As a result, so-called tape damage did not occur, the running characteristic of the tape was good for a long period and the tape was superior in recording and playing back.

On the other hand, when a tape cassette in which the guide roller to guide the tape was precisely, vertically provided to the lower half 1a, was placed in the same video tape recorder and recording and playing back were repeatedly conducted in the same manner as described above, tape damage occurred, the running characteristics of the tape were lowered and the recording and playing back characteristics were inferior.

The tape cassette of the present invention comprises: a cassette case main body; the first and second reels provided in the cassette case main body; the first and second tape guides provided along a predetermined tape path between the first and second tape reels; and a tape stretched between the above-described first and second reels along the first and second tape guides, wherein the above-described second tape guide is inclined, and the tape pulled out from the tape cassette is upwardly pushed when the tape is running. Accordingly, the tape cassette of the present invention has the following characteristics. Namely, even when the tape cassette is provided in a recording and playing back apparatus and recording and playing back are repeatedly conducted, the tape damage does not occur, and the tape running characteristics are good for a long period and recording and playing back are superior.

**Claims**

1. A tape cassette comprising:
   a first and second tape reels for supplying and taking up a roll of tape; and
   a first and second tape guides disposed to form a tape passage between said first and second tape reels, for guiding said tape to run along said tape passage, either said first or second tape guides inclined in positional relation to the tape passage so as to move the tape in a predetermined direction.

2. The tape cassette of claim 1, further comprising a case for housing said first and second tape reels and said first and second tape guides therein, said case including a floor plate;
   wherein said tape passage is formed in positional relation to said floor plate so as to be perpendicular and to run horizontally.

3. The tape cassette of claim 2,
   wherein said first and second tape guides are disposed to come in contact with said tape, and
   wherein said inclined tape guides is adapted to exert a stronger press contact to one side of said tape than that to the other side of said tape.

# F I G. 1

# F I G. 2

(0.35, 0.35)

EP 0 450 826 A1

European Patent Office

EUROPEAN SEARCH REPORT

Application Number

# DOCUMENTS CONSIDERED TO BE RELEVANT

EP 91302588.8

| Category | Citation of document with indication, where appropriate, of relevant passages | Relevant to claim | CLASSIFICATION CF THE APPLICATION (Int. Cl.5) |
|---|---|---|---|
| X | AT - B - 343 931 (SONY CORP.) * Fig. 1-4; claims 1-13 * ---- | 1-3 | G 11 B 23/04 G 11 B 23/08 |
| | | | **TECHNICAL FIELDS SEARCHED (Int. C.5)** |
| | | | G 11 B 23/00 |

The present search report has been drawn up for all claims

| Place of search | Date of completion of the search | Examiner |
|---|---|---|
| VIENNA | 28-06-1991 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

------------------------------------------------------------
& : member of the same patent family, corresponding document

EPO FORM 1503 03.82 (P0401)

6